# EUROPÄISCHE PATENTSCHRIFT

(11) **EP 0 913 547 B1**
(45) Veröffentlichungstag und Bekanntmachung des Hinweises auf die Patenterteilung: **07.04.2004**
(21) Anmeldenummer: 98118098.7
(22) Anmeldetag: 24.09.1998
(51) Int. Cl.: E05B 49/00, B60R 25/02, B60R 25/04

(54) **Schliesssystem, insbesondere für Kraftfahrzeuge**
Locking system, in particular for motor vehicles
Systéme de verrouillage, en particulier pour véhicules à moteur

(30) Priorität: 02.10.1997 DE 19743602
(43) Veröffentlichungstag der Anmeldung: 06.05.1999
(73) Patentinhaber: Marquardt GmbH, 78604 Rietheim-Weilheim (DE)
(72) Erfinder: Geiger, August, 78607 Talheim (DE); Müller, Karl, 78628 Rottweil-Neufra (DE)
(74) Vertreter: Patentanwälte Eisele, Otten, Roth & Dobler

(56) Entgegenhaltungen:
- WO-A-95/09746
- DE-A- 4 434 655
- DE-C- 4 117 721
- FR-A- 2 610 033
- US-A- 4 805 223

## Beschreibung

Die Erfindung betrifft ein elektronisches Schloß nach dem Oberbegriff des Patentanspruchs 1.

Ein derartiges elektronisches Schloß wird in Kraftfahrzeugen als elektronisches Zündschloß zur Betätigung eines zugehörigen Betriebsaggregats, wie einer Motorsteuerung, einer Wegfahrsperre o. dgl. verwendet.

Aus der WO 95/09746 ist ein Schließsystem für ein Kraftfahrzeug bekannt, das aus einem elektronischen Schloß und einem zugehörigen elektronischen Schlüssel besteht. Der Schlüssel tauscht mit dem Schloß codierte optische Betriebssignale über einen im Schloß befindlichen, als lineare optische Übertragungsstrecke dienenden Lichtleiter aus. Hierzu besitzt das Schloß eine Aufnahme, in der der Schlüssel derart einführbar ist, daß der Schlüssel dem ersten Ende der optischen Übertragungsstrecke zugeordnet ist. Im Schloß sind dem zweiten Ende der optischen Übertragungsstrecke zugeordnete elektrooptische Wandlerelemente, die als Mittel zur Verarbeitung der optischen Betriebssignale dienen, auf einer Leiterplatte angeordnet.

Aufgrund der geringen Intensität der optischen Betriebssignale sind die elektrooptischen Wandlerelemente in unmittelbarer Nähe am zweiten Ende der optischen Übertragungsstrecke angeordnet. Diese Anordnung erfordert wiederum, daß sich die Leiterplatte zur Aufnahme der elektrooptischen Wandlerelemente ebenfalls am zweiten Ende der optischen Übertragungsstrecke und zwar soweit wie möglich in einem angenäherten rechten Winkel zur optischen Übertragungsstrecke befindet. Diese Anforderung bedingt wiederum eine kompliziert im Gehäuse des Schlosses angeordnete Leiterplatte, wobei im allgemeinen die Leiterplatte dann in mehrere Teile gefaltet ist.

Weiter ist aus der FR-A-2 610 033 ein aus einem elektronischen Schlüssel und einem elektronischen Schloß bestehendes Schließsystem bekannt. Der in eine Aufnahme am Schloß einführbare Schlüssel tauscht mit dem Schloß codierte optische Betriebssignale aus. Hierzu schließt sich ein Lichtleitstab, der als lineare optische Übertragungsstrecke dient, an die Aufnahme an. Beabstandet zur optischen Übertragungsstrecke ist eine elektronische Schaltung mit einem Photoempfänger auf einer Leiterplatte angeordnet. Mittels eines Spiegels werden die optischen Betriebssignale vom Lichtleitstab zum Photoempfänger umgelenkt.

Nachteilig bei diesem Schloß erscheint der Abstand zwischen dem der Umlenkung für die optischen Betriebssignale dienenden Spiegel und dem Photoempfänger, woraus eine Verringerung der Intensität der optischen Betriebssignale resultiert. Um die Intensitätsverringerung auszugleichen ist eine entsprechend komplexe Anordnung der Leiterplatte notwendig.

Der Erfindung liegt die Aufgabe zugrunde, das elektronische Schloß derart weiterzuentwickeln, daß die Anordnung der Leiterplatte im Gehäuse des Schlosses vereinfacht ist, wobei eine weitgehend verlustfreie Übertragung des optischen Betriebssignals gewährleistet sein soll.

Diese Aufgabe wird bei einem gattungsgemäßen elektronischen Schloß durch die kennzeichnenden Merkmale des Anspruchs 1 gelöst.

Die Anordnung der Leiterplatte im Gehäuse des Schlosses ist dadurch vereinfacht, daß die Mittel zur Verarbeitung des optischen Betriebssignals mit einem Abstand zur optischen Übertragungsstrecke angeordnet sind. Am zweiten Ende der optischen Übertragungsstrecke befindet sich ein optisches Umlenkungselement, das eine Richtungsänderung des optischen Betriebssignals zwischen der optischen Übertragungsstrecke sowie von und/oder zu den Mitteln zur Verarbeitung des optischen Betriebssignals bewirkt. Um eine weitgehend verlustfreie Übertragung des optischen Betriebssignals zu gewährleisten, ist die optische Übertragungsstrecke als Lichtleitstab ausgebildet, der beweglich in Richtung auf das Umlenkungselement im Schloß angeordnet ist. Bei Einführen des Schlüssels in das Schloß wird das zweite Ende des Lichtleitstabes in unmittelbare Nähe an das Umlenkungselement bewegt. Weitere Ausgestaltungen der Erfindung sind Gegenstand der Unteransprüche.

So können die Mittel zur Verarbeitung des optischen Betriebssignals ungefähr parallel zur optischen Übertragungsstrecke angeordnet sein, wobei es sich anbietet, die Mittel zur Verarbeitung des optischen Betriebssignals auf einer in etwa parallel zur optischen Übertragungsstrecke angeordneten Leiterplatte anzubringen. Bevorzugterweise erfolgt dann eine Richtungsänderung des optischen Betriebssignals im optischen Umlenkungselement um ungefähr 90 Grad. Um Kosten einzusparen kann das Schloss lediglich eine einzige Leiterplatte enthalten, auf der neben den Mitteln zur Verarbeitung des optischen Betriebssignals weitere zum Betrieb des Schlosses dienende elektronische und/oder elektrische Bauteile angeordnet sind.

Bei der Bewegung des Lichtleitstabes durch Einführen des Schlüssels in das Schloß kann gleichzeitig ein elektrisches Schaltelement im Schloß zur Signalisierung "Schlüssel steckt" betätigt werden.

In einer Weiterbildung besitzt das Schloß eine Aufnahme für den Schlüssel, wobei der in die Aufnahme eingeführte Schlüssel auf einen im Schloß befindlichen Rotor zu dessen Drehung eingreift. In einem Durchbruch im Rotor ist der Lichtleitstab angeordnet. Der Rotor wirkt bei der Drehung wiederum mit im Gehäuse des Schlosses befindlichen Schaltelementen in der Art eines Lastschalters zusammen. Das Schaltelement, das das Signal "Schlüssel steckt" erzeugt, kann ebenfalls im Lastschalter angeordnet sein.

Die Ein- und Austrittsflächen des optischen Umlenkungselements stehen unter einem ersten Winkel aufeinander. Zwischen der Ein- und Austrittsfläche befindet sich eine Reflektionsfläche für das optische Betriebssignal, die einen zweiten Winkel mit der Mittelsenkrechten der Einund/oder Austrittsflächen einschließt, wobei die Größe des zweiten Winkels in etwa die Hälfte des ersten Winkels beträgt. Insbesondere können die Ein- und Austrittsflächen senkrecht aufeinander stehen, so daß die Reflektionsfläche einen Winkel von etwa 45 Grad mit den Mittelsenkrechten bildet. Um gegebenenfalls sonstige optische Verluste zu begrenzen, kann an der Ein- und/oder Austrittsfläche eine Linse angebracht sein, die zweckmäßigerweise an die Einund/oder Austrittsfläche einstückig angeformt ist. Die Reflektionsfläche besitzt eine ebene oder leicht ballige Gestalt. Zumindestens die Reflektionsfläche oder gegebenenfalls auch die gesamte Oberfläche des optischen Umlenkungselements kann spiegelglänzend ausgestaltet sein.

Es bietet sich an, an der Reflektionsfläche eine als Staubschutz oder zu ähnlichen Zwecken dienende Abdeckung anzuordnen, womit auch optische Verluste an der Reflektionsfläche verkleinert werden können. Bei dieser Abdeckung kann es sich um eine aus einer mittels Bedrucken, Bedampfen o. dgl. auf die Reflektionsfläche aufgebrachte Schicht handeln. Selbstverständlich kann auch ein auf die Reflektionsfläche aufgesetztes separates Teil, das in der Art einer Kappe ausgestaltet ist, verwendet werden. Eine weitere Möglichkeit besteht darin, diese Schicht durch ein aus einem an die Reflektionsfläche in der Art eines Zweikomponententeils angespritztem Element auszugestalten.

Das Umlenkungselement besitzt ein zur Fixierung im Gehäuse dienendes Halteelement. Mittels des Halteelements ist das optische Umlenkungselement gleichzeitig zu den Mitteln zur optischen Verarbeitung ausgerichtet. Das Halteelement kann mit Rast- und/oder Schnapphaken in der Leiterplatte angeordnet sowie gegebenenfalls mit einer Nase dem Rotor zugeordnet sein. Das Halteelement kann weiterhin am Umlenkungselement integriert sein oder als separates Trägerteil mit einer Aufnahme für das Umlenkungselement ausgebildet sein oder auch in der Art eines Zweikomponententeils ausgebildet sein. Zweckmäßigerweise handelt es sich im letzteren Fall um das Zweikompontenteil, das an der Reflektionsfläche angebracht ist. Dieses Zweikomponententeil bietet gleichzeitig einen Schutz der Reflektionsfläche und eine zusätzliche Fixierung des Umlenkungselements am Trägerteil unter Einsparung einer Komponente.

Um eine Schädigung des Schlosses durch äußere Einflüsse zu verhindern, kann im Gehäuse eine auf den Lichtleitstab einwirkende Dichtung angeordnet sein. Zweckmäßigerweise befindet sich weiter im Gehäuse eine auf den Rotor einwirkende zusätzliche Dichtung. Diese Dichtungen sind beispielsweise als elastisches Dichtelement oder als Labyrinth-Dichtung ausgebildet.

Es kann für eine besonders kompakte Ausbildung des Schlosses oder auch aus sonstigen Gründen erforderlich sein, die Mittel zur Verarbeitung des optischen Betriebssignals in mehreren Richtungen versetzt zu der optischen Übertragungsstrecke anzuordnen. Für diesen Fall ist das optische Umlenkungselement derart ausgestaltet, daß im optischen Umlenkungselement eine mehrfache Richtungsänderung des optischen Betriebssignals zwischen der optischen Übertragungsstrecke sowie von und/oder zu den Mitteln zur Verarbeitung des optischen Betriebssignals erfolgt.

Insbesondere kann dann eine zweifache Richtungsänderung des optischen Betriebssignals erforderlich sein. In diesem Fall bietet es sich weiter an, das optische Umlenkungselement aus zwei Teilen herzustellen. Der erste Teil ist mit dem Rotor drehbar angeordnet und zweckmäßigerweise einstückig mit der optischen Übertragungsstrecke ausgebildet. Der zweite Teil ist dann feststehend im Gehäuse des Schlosses angeordnet und den Mitteln zur Verarbeitung des optischen Betriebssignals zugeordnet. Bevorzugterweise sind bei dieser Ausführung der zweite Teil des Umlenkungselements und die Mittel zur Verarbeitung des optischen Betriebssignals je zweifach im Gehäuse angeordnet. Der erste Teil des Umlenkungselements wirkt dann in Ausgangsstellung des Rotors mit dem einen zweiten Teil des Umlenkungselements und in Betriebsstellung des Rotors mit dem anderen zweiten Teil des Umlenkungselements zusammen.

Die mit der Erfindung erzielten Vorteile bestehen insbesondere darin, daß die Mittel zur Verarbeitung des optischen Betriebssignals an beliebiger geeigneter Stelle im Schloß angeordnet werden können. Dadurch kann das Schloß kompakter ausgestaltet werden, und dieses wiederum einfacher im Kraftfahrzeug untergebracht werden. Insbesondere ist keine komplizierte, gefaltete Leiterplatte für das Schloß notwendig, so daß auch Kosteneinsparungen erzielt werden. Schließlich wird das Schloß weniger störanfällig, wodurch sich auch dessen Betriebssicherheit erhöht.

Ausführungsbeispiele der Erfindung sind in den Zeichnungen dargestellt und werden im folgenden näher beschrieben. Es zeigen
- Fig. 1: schematisch eine Funktionsübersicht eines Schließsystems in einem Kraftfahrzeug,
- Fig. 2: ein Blockschaltbild für die Elektronik des Schließsystems,
- Fig. 3: einen Längsschnitt durch das Schloß aus Fig. 1,
- Fig. 4: einen Schnitt wie in Fig. 3, wobei der Schlüssel in die Aufnahme eingesteckt ist,
- Fig. 5: einen Schnitt entlang der Linie 5-5 aus Fig. 3,
- Fig. 6: einen Schnitt entlang der Linie 6-6 aus Fig. 3,
- Fig. 7: das optische Umlenkungselement als Einzelteil in Seitenansicht,
- Fig. 8: das optische Umlenkungselement als Einzelteil wie in Fig. 7 in einer Weiterbildung und teilweise im Schnitt,
- Fig. 9: das optische Umlenkungselement als Einzelteil in Frontansicht,
- Fig. 10: einen Schnitt wie in Fig. 4, wobei der Schlüssel jedoch weggelassen ist, gemäß einem weiteren Ausführungsbeispiel,
- Fig. 11: eine Kappe für das Umlenkungselement in Frontansicht,
- Fig. 12: die Kappe aus Fig. 11 in Seitenansicht,
- Fig. 13: den Lastschalter für das Schloß gemäß Fig. 3 als Einzelteil in Draufsicht,
- Fig. 14: den Lastschalter als Einzelteil in Seitenansicht,
- Fig. 15: einen Längsschnitt durch ein Schloß in nochmals einer weiteren Ausführungsform,
- Fig. 16: einen Schnitt entlang der Linie 16-16 aus Fig. 15,
- Fig. 17: einen Schnitt entlang der Linie 17-17 aus Fig. 16 und
- Fig. 18: den zweiten Teil des optischen Umlenkungselement entsprechend der Fig. 17 als Einzelteil in Seitenansicht.

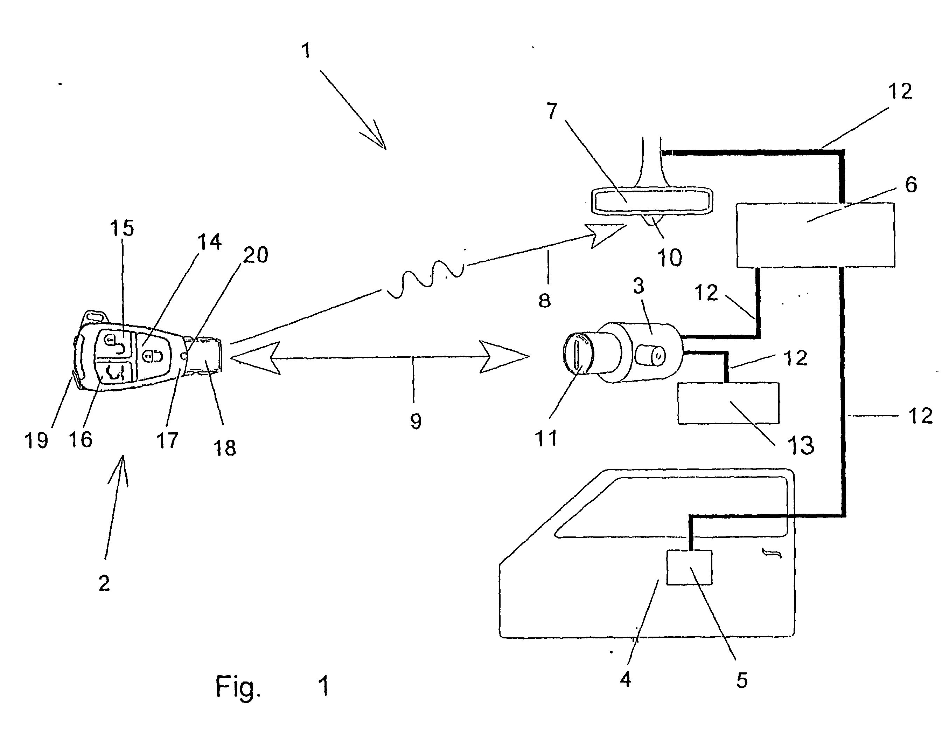

In Fig. 1 ist ein für ein Kraftfahrzeug bestimmtes Schließsystem 1 schematisch gemäß einem Teil seiner Funktionen gezeigt. Das Schließsystem 1 besteht aus einem elektronischen Schloß 3 und zwar aus einem elektronischen Zündschloß zur Betätigung eines Betriebsaggregats 13 sowie einem zugehörigen elektronischen Schlüssel 2. Beim Betriebsaggregat 13 kann es sich beispielsweise um die Motorelektronik des Kraftfahrzeugs, eine elektronische Wegfahrsperre o. dgl. handeln. Das Betriebsaggregat 13 steht über ein Bussystem 12, wie den bekannten CAN-Bus, mit dem Schloß 3 in Verbindung, so daß das Betriebsaggregat 13 durch entsprechende Signale vom Schloß 3 in Betrieb genommen werden kann. Zur Inbetriebnahme wird der Schlüssel 2 mit seinem Frontteil 18 in eine Aufnahme 11 des Schlosses 3 eingeführt. Anschließend erfolgt der Austausch wenigstens eines codierten optischen Betriebssignals 9, beispielsweise eines Infrarot-Signals, zwischen dem Schlüssel 2 und dem Schloß 3. Nach positiver Auswertung des Betriebssignals 9 wird das Schloß 3 freigegeben und das Betriebsaggregat 13 kann dann in Betrieb genommen werden.

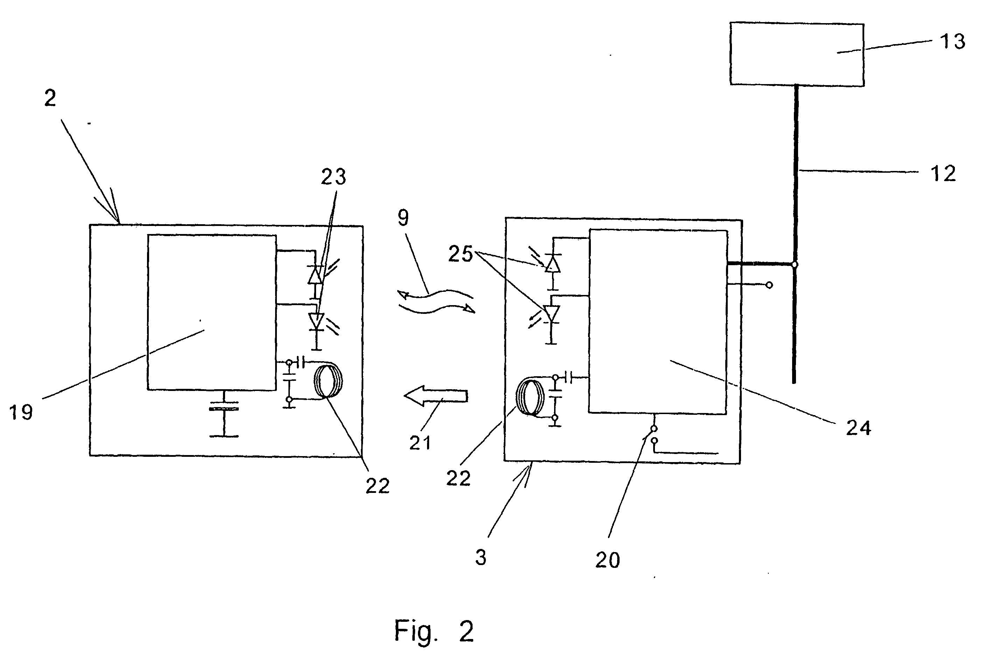

Die Ausgestaltung der benötigten Elektronik für den Schlüssel 2 und das Schloß 3 ist als schematisches Blockschaltbild in Fig. 2 näher gezeigt.

Der Schlüssel 2 besitzt eine zum Betrieb dienende Schlüsselelektronik 19, während sich im Schloß 3 eine zum Betrieb dienende Schloßelektronik 24 befindet. Ist der Schlüssel 2 in die Aufnahme 11 des Schlosses 3 eingeführt, so wird durch den Schlüssel 2 ein Schalter 20 im Schloß 3 betätigt, der das Signal "Schlüssel steckt" erzeugt. Das Signal "Schlüssel steckt" schaltet wiederum eine induktive Energieübertragung 21 mittels Induktionsspulen 22 vom Schloß 3 auf den Schlüssel 2 ein, so daß die für den Betrieb der Schlüsselelektronik 19 benötigte Energie vom Schloß 3 geliefert wird.

Mit der Schlüsselelektronik 19 stehen elektrooptische Wandlerelemente 23 und mit der Schloßelektronik 24 weitere elektrooptische Wandlerelemente 25 in Verbindung, wobei die elektrooptischen Wandlerelemente 23, 25 beispielsweise aus einer Infrarot-Sendediode und einer Infrarot-Empfangsdiode bestehen. Das in der Schlüsselelektronik 19 erzeugte und über die elektrooptischen Wandlerelemente 23, 25 ausgetauschte codierte optische Betriebssignal 9 wird dann in der Schloßelektronik 24 decodiert und ausgewertet, wobei nach positiver Auswertung, d.h. es handelt sich um den berechtigten Schlüssel 2, die Inbetriebnahme des Betriebsaggregats 13 durch das Schloß 3 ermöglicht wird, wie nachfolgend noch näher erläutert wird. Gegebenenfalls kann auch in der Schloßelektronik 24 ein optisches Betriebssignal 9 erzeugt werden, das nach Austausch über die elektrooptischen Wandlerelemente 23, 25 in der Schlüsselelektronik 19 decodiert und ausgewertet wird, so daß insgesamt eine bidirektionale Codeübertragung zwischen dem Schlüssel 2 und dem Schloß 3 erfolgt.

Zusätzlich kann der Schlüssel 2 für die Ansteuerung weiterer Funktionen verwendet werden, wie anhand der Fig. 1 ersichtlich ist. Mit Hilfe des elektronischen Schlüssels 2 läßt sich das Schließsystem 1 zur Zugangsberechtigung fernbedienbar ansteuern, im vorliegenden Fall lassen sich die Autotüren 4 des Kraftfahrzeugs fernbedienbar bis zu einer gewissen maximalen Entfernung vom Kraftfahrzeug ver- und entriegeln.

Für die Ansteuerung dieser weiteren Funktionen ist zwischen dem Schlüssel 2 und einer zentral im Kraftfahrzeug, beispielsweise am Innenspiegel 7, angeordneten Empfangs- und Sendeeinrichtung 10 für das Schließsystem 1 ein codiertes Betriebssignal 8 übertragbar. Als Betriebssignal 8 für den Schlüssel 2 werden in der Regel elektromagnetische Signale, wie Hf-Signale und/oder Infrarot-Signale o. dgl., verwendet. Die Übertragung des Betriebssignals 8 ist mittels am Gehäuse 17 des Schlüssels 2 befindlicher Betätigungsorgane 14, 15, 16 durch den Benutzer auslösbar. Das übertragene Betriebssignal 8 wird einer im Kraftfahrzeug befindlichen Signalverarbeitungseinrichtung 6 zugeführt und nach positiver Auswertung des Betriebssignals 8, d.h. falls es sich um den berechtigten Schlüssel 2 handelt, wird ein beispielsweise in der jeweiligen Autotüre 4 befindliches Steuergerät 5, das mit der Signalverarbeitungseinrichtung 6 über das Bussystem 12 in Verbindung steht, zur Ver- oder Entriegelung der Autotüren 4 betätigt. Bei dem Steuergerät 5 kann es sich zum Beispiel um eine an sich bekannte Zentralverriegelung handeln.

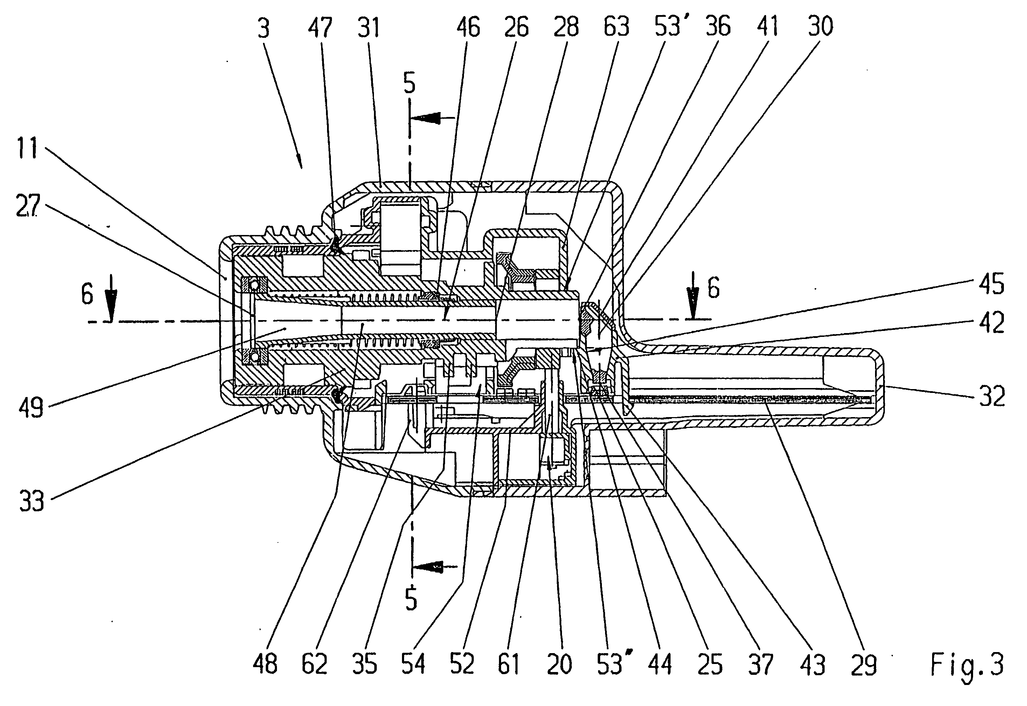

Wie bereits erläutert, tauscht der Schlüssel 2 mit dem Schloß 3 wenigstens ein codiertes optisches Betriebssignal 9 aus. Hierfür befindet sich im Gehäuse 31 des Schlosses 3 eine im wesentlichen lineare optische Übertragungsstrecke 26 zur Weiterleitung des optischen Betriebssignals 9, wie der Fig. 3 zu entnehmen ist. Diese optische Übertragungsstrecke 26 besteht aus einem Lichtleitstab 48, der aus einem für das optische Betriebssignal 9 transparenten Kunststoff hergestellt ist. Der im wesentlichen zylindrisch ausgestaltete Lichtleitstab 48 besitzt an dem der Aufnahme 11 zugewandten ersten Ende 27 der optischen Übertragungsstrecke 26 eine in etwa konisch verlaufende Erweiterung 49.

Die aus elektrooptischen Wandlerelementen 25 bestehenden, im Gehäuse 31 des Schlosses 3 befindlichen und dem zweiten Ende 28 der optischen Übertragungsstrecke 26 zugeordneten Mittel zur Verarbeitung des optischen Betriebssignals 9 sind auf einer Leiterplatte 29 angeordnet, die wiederum einen seitlichen Abstand zu der optischen Übertragungsstrecke 26 besitzt. Zur Überbrückung dieses Abstandes befindet sich im Gehäuse 31 ein optisches Umlenkungselement 30, das dem zweiten Ende 28 der optischen Übertragungsstrecke 26 zugewandt ist. Das optische Umlenkungselement 30 ist derart ausgebildet, daß eine Richtungsänderung des optischen Betriebssignals 9 zwischen der optischen Übertragungsstrecke 26 sowie von und/oder zu den elektrooptischen Wandlerelementen 25 erfolgt.

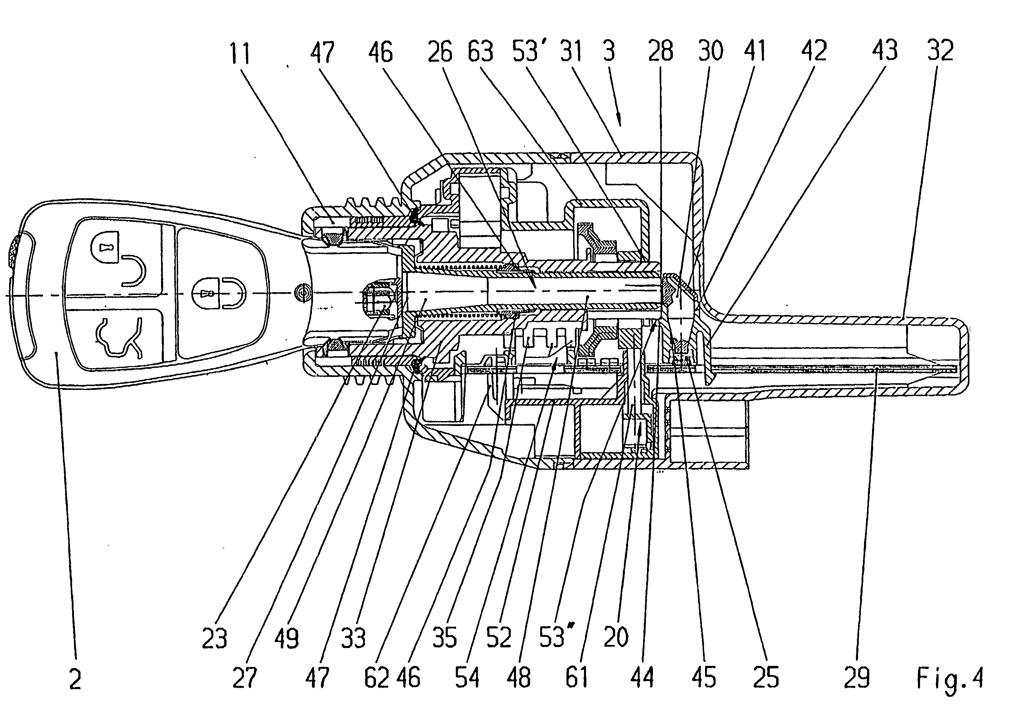

Wird nun der Schlüssel 2 in die Aufnahme 11 am Schloß 3 eingesteckt, so ist der Schlüssel 2 dem ersten Ende 27 der optischen Übertragungsstrecke 26 zugeordnet, wie in Fig. 4 zu sehen ist. Der Lichtleitstab 48 ist beweglich in Richtung auf das Umlenkungselement 30 im Schloß 3 angeordnet. Wie man durch Vergleich von Fig. 3 und 4 erkennt, wird bei Einführen des Schlüssels 2 in das Schloß 3 das zweite Ende 28 des Lichtleitstabes 48 in unmittelbare Nähe an das Umlenkungselement 30 bewegt. Dieser unmittelbare Übergang zwischen dem Ende 28 des Lichtleitstabes 48 und dem Umlenkungselement 30 sowie die konische Erweiterung 49 am Ende 27 des Lichtleitstabes 48 gewährleisten, daß Leistungsverluste des optischen Betriebssignals 9 bei der Übertragung zwischen den elektrooptischen Wandlerelementen 23 im Schlüssel 2 und den elektrooptischen Wandlerelementen 25 im Schloß 3 weitgehend ausgeschlossen sind. Gleichzeitig kann durch die Bewegung des Lichtleitstabes 48 das lediglich schematisch angedeutete, elektrische Schaltelement 20 im Schloß 3 zur Signalisierung "Schlüssel steckt" mittels eines Stößels 61 betätigt werden.

Die Leiterplatte 29 mitsamt den darauf angeordneten elektrooptischen Wandlerelementen 25 verläuft, wie aus Fig. 3 und 4 ersichtlich, ungefähr parallel zur optischen Übertragungsstrecke 26. Bei einer derartigen Ausgestaltung erfolgt eine Richtungsänderung des optischen Betriebssignals 9 im optischen Umlenkungselement 30 um ungefähr 90 Grad. Es ist nun bevorzugt, die weiteren zum Betrieb des Schlosses 3 dienenden elektronischen und/oder elektrischen Bauteile der in Fig. 2 schematisch angedeuteten Schloßelektronik 24 ebenfalls auf der Leiterplatte 29 anzuordnen. Somit enthält das Schloß 3 lediglich eine einzige Leiterplatte 29, die gegebenenfalls in einen Gehäuseansatz 32 am Gehäuse 31 des Schlosses 3 hineinragen kann. Dadurch wird die Halterung der Leiterplatte 29 vereinfacht und insbesondere keine teure, gefaltete Leiterplatte wie bisher benötigt.

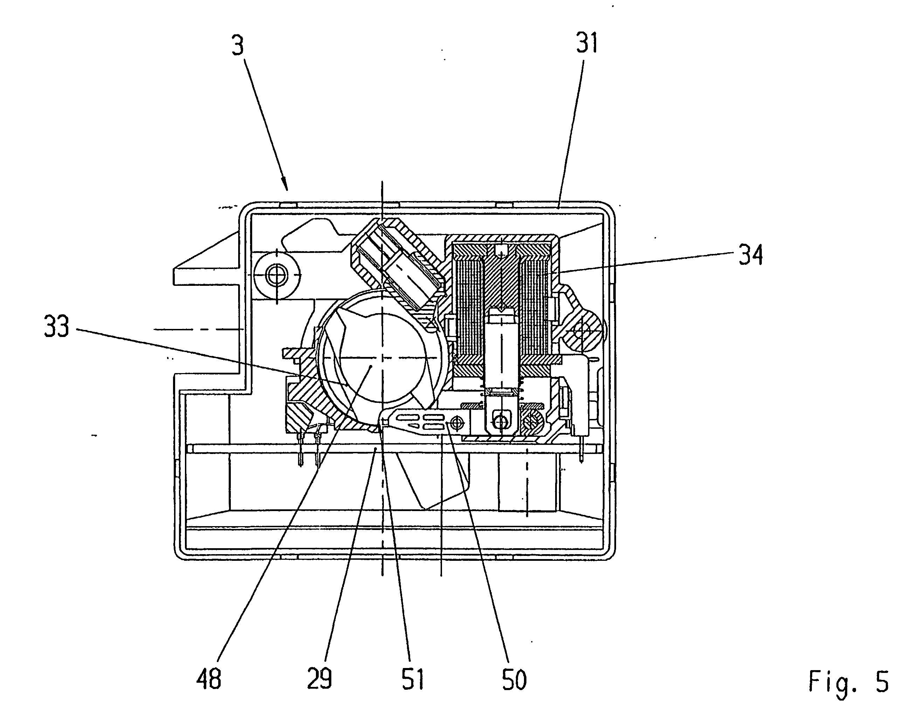

Der Lichtleitstab 48 ist in der Mittelachse in einem Durchbruch eines im Gehäuse 31 befindlichen Rotors 33 angeordnet. Befindet sich der Schlüssel 2 in der Aufnahme 11, so ist ein Formschluß zwischen dem Schlüssel 2 und dem Rotor 33 hergestellt, wie weiter aus Fig. 4 ersichtlich ist. Wie anhand der Fig. 5 zu sehen ist, greift ein Sperrhebel 50 einer elektromagnetischen Sperre 34 in eine Ausnehmung 51 am Rotor 33 derart ein, daß die Drehbewegung des Rotors 33 in der Ausgangsstellung des Schlosses 3 gesperrt ist. Ist jedoch die Auswertung des zwischen Schlüssel 2 und Schloß 3 über den Lichtleitstab 48 und das Umlenkungselement 30 ausgetauschten Betriebssignals 9 positiv, so wird die elektromagnetische Sperre 34 angesteuert und dadurch der Sperrhebel 50 aus der Ausnehmung 51 herausbewegt. Somit ist die Bewegung des Rotors 33 freigegeben und der Rotor 33 kann manuell mittels des Schlüssels 2 gedreht werden. Bei dieser Drehung wirkt dann der Rotor 33 mit im Gehäuse 31 befindlichen, in Fig. 3 und 4 lediglich schematisch gezeigten Schaltelementen 35 in der Art eines Lastschalters 54 zusammen, so daß die Zündung des Motors angeschaltet, der Motor gestartet oder sonstige Funktionen des Kraftfahrzeugs bewirkt werden.

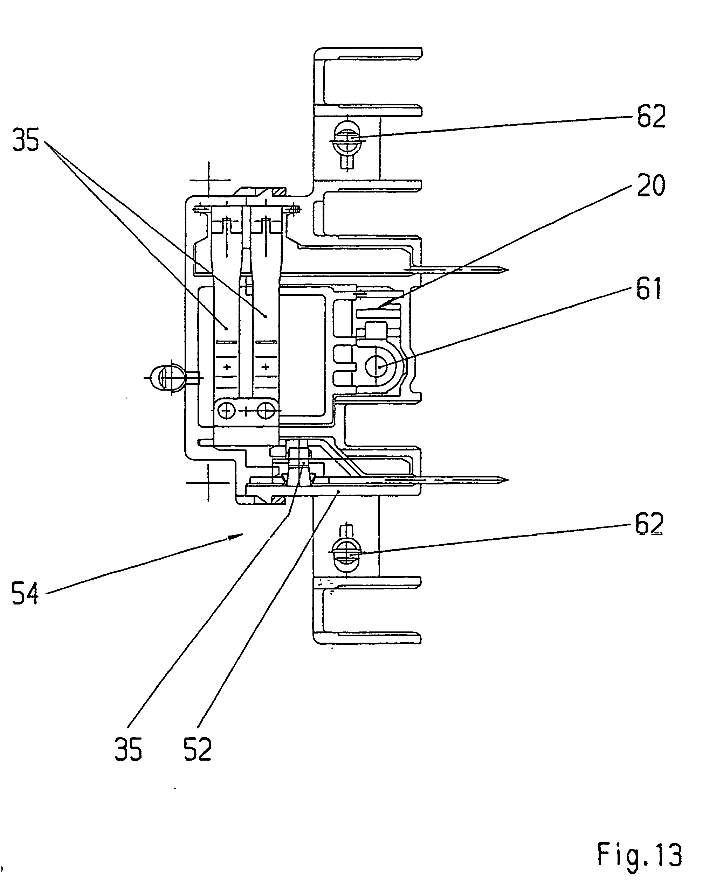

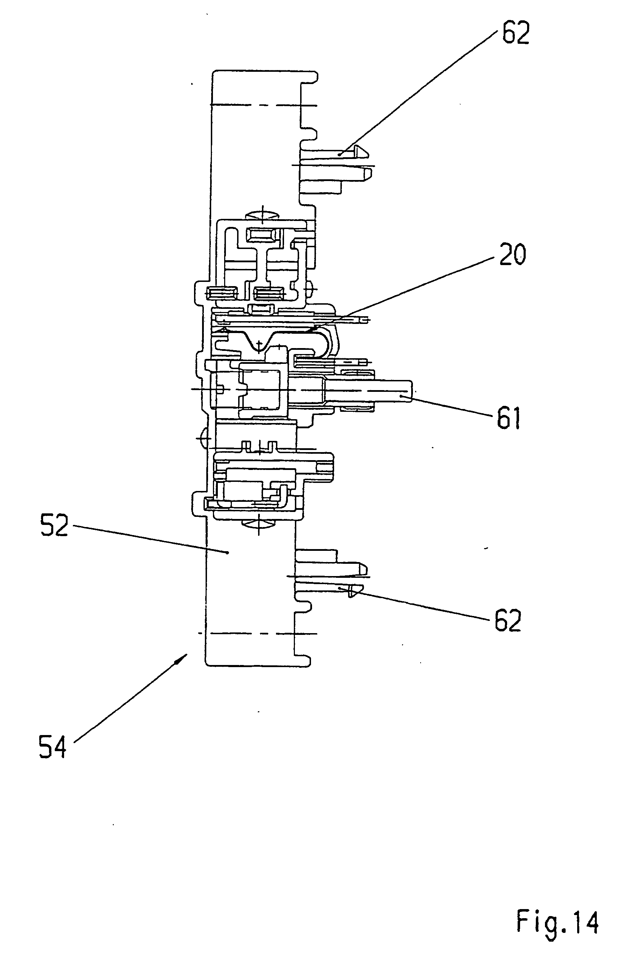

Der Lastschalter 54 besitzt ein Gehäuseteil 52, das im Inneren des Gehäuses 31 für das Schloß 3 befestigt ist. Der Lastschalter 54 ist als separates Einzelteil in Fig. 13 und 14 zu sehen. Im Gehäuseteil 52 des Lastschalters 54 befindet sich auch der ansonsten nur schematisch angedeutete, in Fig. 14 näher dargestellte Schalter 20, der das Signal "Schlüssel steckt" erzeugt. Der im Gehäuseteil 52 vormontierte Lastschalter 54 ist mittels Rastelemente 62 von unten an der Leiterplatte 29 im Gehäuse 31 befestigt.

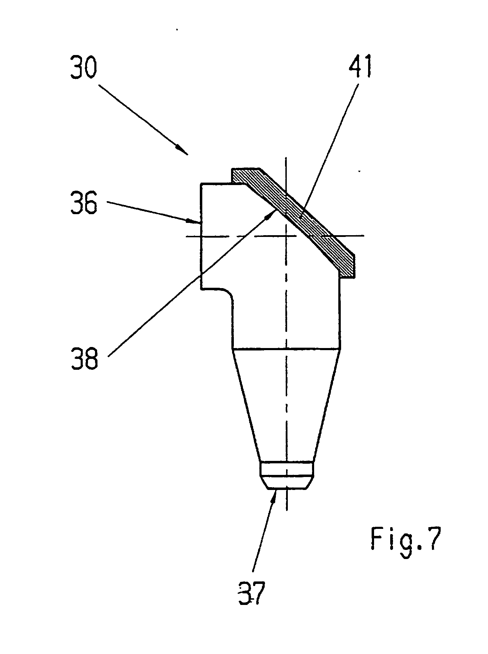

Die nähere Ausbildung des optischen Umlenkungselements 30 ist in den Fig. 7 bis 9 zu sehen. Das optische Umlenkungselement 30 besteht aus einem für das optische Betriebssignal 9 weitgehend transparenten Material, beispielsweise aus einem Kunststoff und besitzt zwei ungefähr senkrecht aufeinander stehende Flächen 36, 37, die als Ein- und/oder Austrittsflächen für das optische Betriebssignal 9 dienen. Zwischen den Flächen 36, 37 befindet sich eine in etwa unter einem Winkel von 45 Grad auf die Mittelsenkrechten der Flächen 36, 37 stehende spiegelartige Reflektionsfläche 38 für das optische Betriebssignal 9. Die Reflektionsfläche 38 ist im wesentlichen eben ausgebildet. Falls notwendig, kann die Reflektionsfläche 38 jedoch auch leicht ballig ausgestaltet sein.

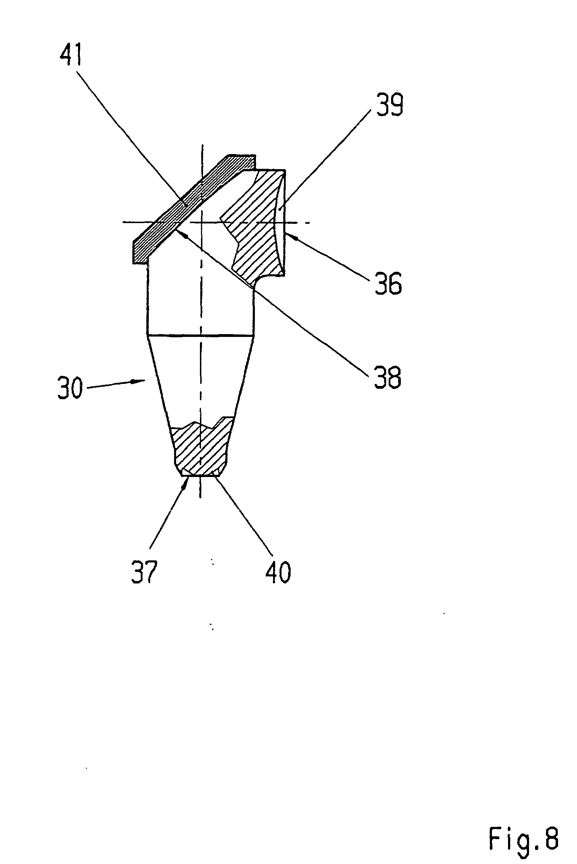

Wie näher aus Fig. 8 hervorgeht, kann in einer Weiterbildung an den Flächen 36, 37 jeweils eine Linse 39, 40 angebracht sein, um die Verluste für das optische Betriebssignal 9 am Ein- und/oder Austritt des optischen Umlenkungselements 30 so gering wie möglich zu halten. Die Linse 39, 40 ist zweckmäßigerweise an die Ein- und/oder Austrittsfläche 36, 37 einstückig angeformt. Insbesondere ist an der Fläche 36 eine Streulinse 39 und an der Fläche 37 eine Sammellinse 40 angeordnet, wodurch die bidirektionale Übertragung des optischen Betriebssignals 9 zwischen den elektrooptischen Wandlerelementen 23, 25 weitgehend verlustfrei erfolgt.

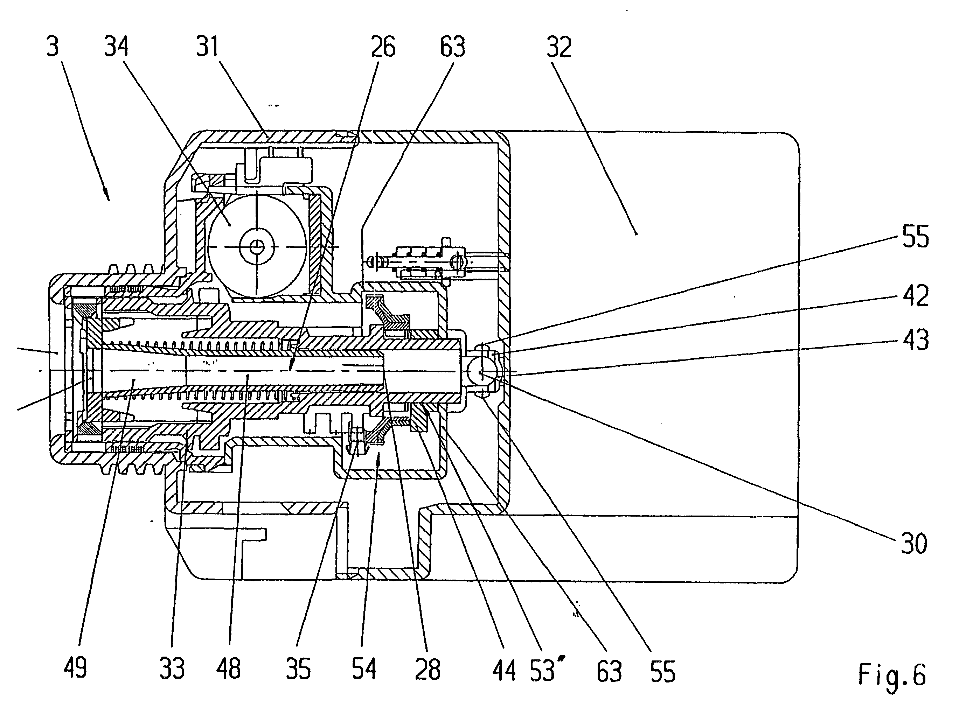

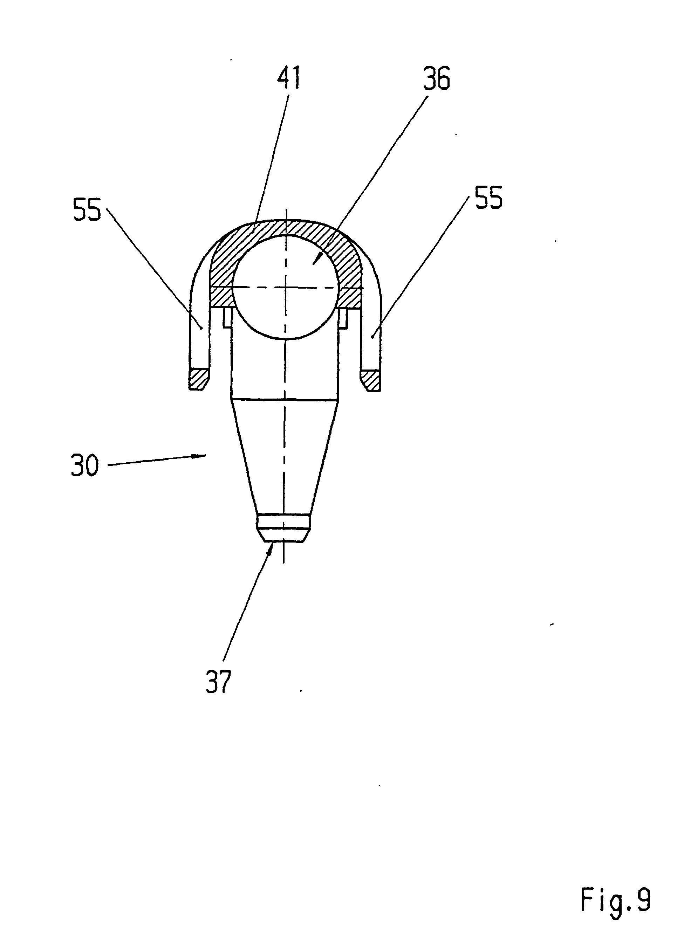

Das optische Umlenkungselement 30 besitzt eine äußere spiegelglänzende Oberfläche, insbesondere an der Reflektionsfläche 38, um auch im optischen Umlenkungselement 30 selbst Streuverluste für das optische Betriebssignal 9 zu minimieren. Zur Verringerung dieser Verluste kann an der Reflektionsfläche 38 auch eine als Staubschutz o. dgl. dienende Abdeckung 41 angeordnet sein. Besonders bevorzugt ist, die Abdeckung 41 aus einem für das optische Betriebssignal 9 nichttransparenten Kunststoff auszubilden und die Abdeckung 41 in der Art eines Zweikomponententeils an das Umlenkungselement 30 anzuspritzen, was in Fig. 9 näher gezeigt ist. An der Abdeckung 41 sind seitlich Rastarme 55 ausgebildet, mit denen das Umlenkungselement 30 dann in eine Aufnahme 45 in einem Halteelement oder einer Halterung 42 einclipsbar ist, wie aus Fig. 3 und 6 näher hervorgeht. Die Halterung 42 ist wiederum mit Rast- und/oder Schnapphaken 43 an der Leiterplatte 29 derart befestigt, daß die Fläche 37 am Umlenkungselement 30 den elektrooptischen Wandlerelementen 25 zugeordnet und das optische Umlenkungselement 30 zu den elektrooptischen Wandlerelementen 25 ausgerichtet ist.

Der Rotor 33 ist drehbar in einem Gehäuseteil 63 angeordnet. An diesem Gehäuseteil 63 befindet sich an dem dem Umlenkungselement 30 zugewandten Ende des Rotors 33 eine als Halbschale ausgebildete Lagerstelle 53'. Die Halterung 42 besitzt eine Nase 44, wie in Fig. 3 und 4 gezeigt ist, die ebenfalls als Halbschale ausgebildet ist und als weitere Lagerstelle 53'' dient. Die beiden Lagerstellen 53', 53'' bilden somit ein Drehlager für den Rotor 33, womit die ansonsten notwendige separate Lagerung für den Rotor 33 eingespart ist. Bevorzugterweise ist die Halterung 42 einstückig mit dem Gehäuseteil 63 ausgebildet, wobei dann das Gehäuseteil 63 mittels der Rast- und Schnapphaken 43 an der Leiterplatte 29 befestigt ist. Selbstverständlich kann auch die Halterung 42 einstückig mit der Abdeckung 41 ausgebildet sein. Gleichzeitig dient in letzterem Fall die Halterung 42 als Schutz für das Umlenkungselement 30 und zusätzlich zu dessen Fixierung im Gehäuse 31. Außerdem wird bei einer solchen Ausbildung eine Komponente eingespart.

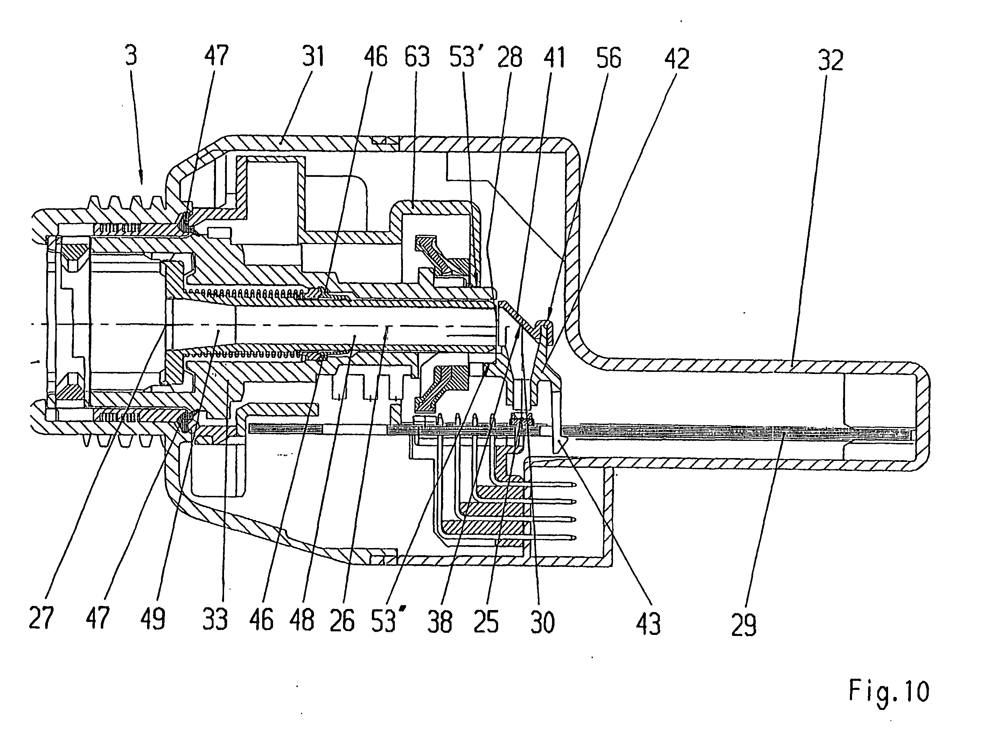

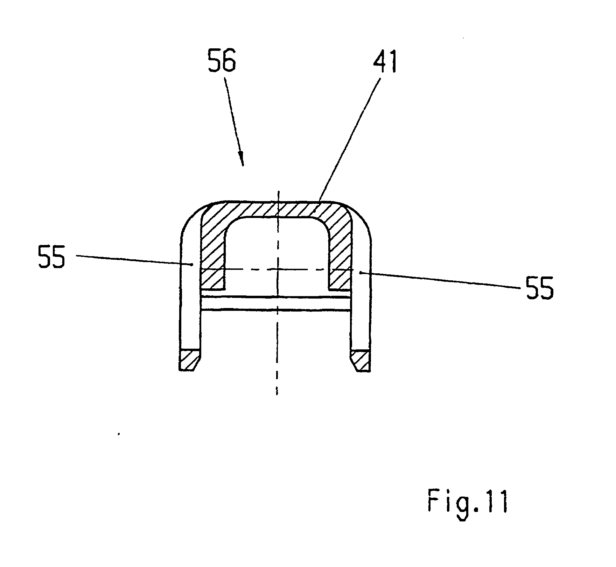

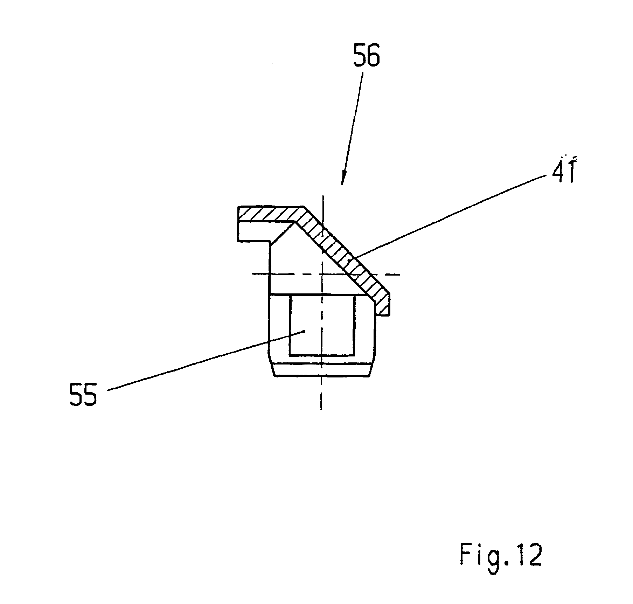

Wie in Fig. 11 und 12 entsprechend einem weiteren Ausführungsbeispiel gezeigt ist, kann die Abdeckung 41 auch aus einem auf die Reflektionsfläche 38 aufgesetzten separaten Teil bestehen, das in der Art einer Kappe 56 ausgestaltet ist. Das Umlenkungselement 30 wird dann in die Halterung 42 eingesetzt und die separate Kappe 56 anschließend derart über die Halterung 42 gestülpt, daß die Reflektionsfläche 38 von der Kappe 56 bedeckt ist, wie in Fig. 10 zu erkennen ist. Dabei können gegebenenfalls an der Kappe 56 auch nicht weiter gezeigte Dichtelemente angeordnet sein, um die Reflektionsfläche 38 vor seitlich eindringendem Staub zu schützen. Selbstverständlich kann es zur Abdeckung der Reflektionsfläche 38 auch genügen, wenn diese mit einer Schicht versehen ist, die für das optische Betriebssignal 9 weitgehend undurchlässig ist. Diese Schicht kann durch Bedrucken mit Farbe, durch Bedampfen mit einem Metall, wie Silber o. dgl., oder durch sonstige Techniken aufgebracht werden. Falls gewünscht kann die Halterung 42 mitsamt den Rast- und/oder Schnapphaken 43 auch am Umlenkungselement 30 einstückig integriert ausgebildet sein.

Um ein Eindringen von Staub, Feuchtigkeit o. dgl. in das Gehäuse 31 des Schlosses 3 zu verhindern, können im Gehäuse 31 an den beweglichen Teilen des Schlosses 3 Dichtungen angeordnet sein, falls dies erforderlich ist. Beim Einstecken des Schlüssels 2 in die Aufnahme 11 wird der Lichtleitstab 48 in Längsrichtung des Schlosses 3 verschoben, wie durch Vergleich von Fig. 3 und 4 näher hervorgeht. Zur Abdichtung dieser Verschiebebewegung befindet sich im Rotor 33 eine Dichtung 46, die auf den Lichtleitstab 48 in der Art eines Abstreifers einwirkt, wie in Fig. 3 oder 4 zu sehen ist. Zur Abdichtung der Drehbewegung des Rotors 33 befindet sich im Gehäuse 31 eine auf den Rotor 33 einwirkende weitere Dichtung 47. Die Dichtungen 46, 47 können beispielsweise als ein elastisches Dichtelement ausgebildet sein. Selbstverständlich können die Dichtungen auch in der Art einer Labyrinthdichtung ausgebildet sein. Ebensogut ist es möglich, im Gehäuse 31 einen Sammelraum für eingedrungene Schadstoffe vorzusehen, in den ein aus dem Gehäuse 31 führender Kanal in der Art einer Drainage mündet, so daß die Schadstoffe aus dem Sammelraum nach außen abgeführt werden können.

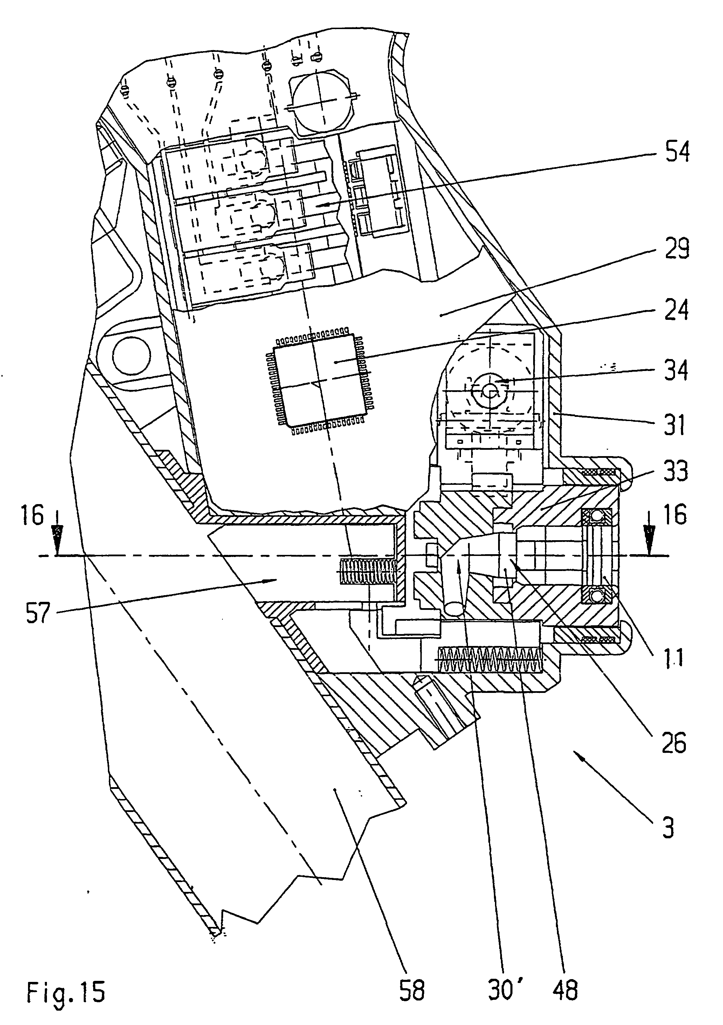

Ein weiteres Ausführungsbeispiel für ein Schloß 3 ist in Fig. 15 bis 17 näher zu sehen. Das Schloß 3 besitzt ein Gehäuse 31, in dem wiederum ein Rotor 33 mit einer Aufnahme 11 für einen elektronischen Schlüssel 2 angeordnet ist. Der Rotor 33 enthält einen Lichtleitstab 48 als optische Übertragungsstrecke 26 für das Betriebssignal 9. Im Gegensatz zum Schloß entsprechend der Fig. 3 ist hier der Lichtleitstab 48 in Längsrichtung unbeweglich angeordnet. Auf den Rotor 33 wirkt ebenfalls eine elektromagnetische Sperre 34 ein, um die Bewegung des Rotors 33 zu ver- oder entriegeln. Weiter befinden sich im Gehäuse 31 ein Lastschalter 54 und eine mittels des Rotors 33 betätigbare, mechanische Lenkungsverriegelung 57 für die Lenkradsäule 58, was jedoch vorliegend nicht weiter von Bedeutung ist.

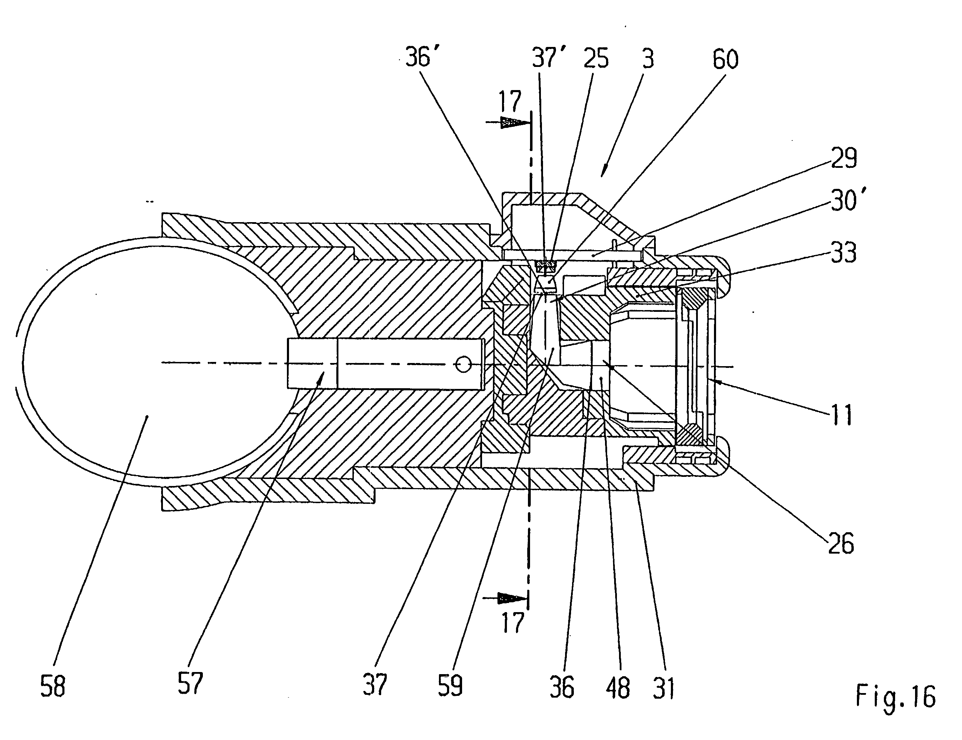

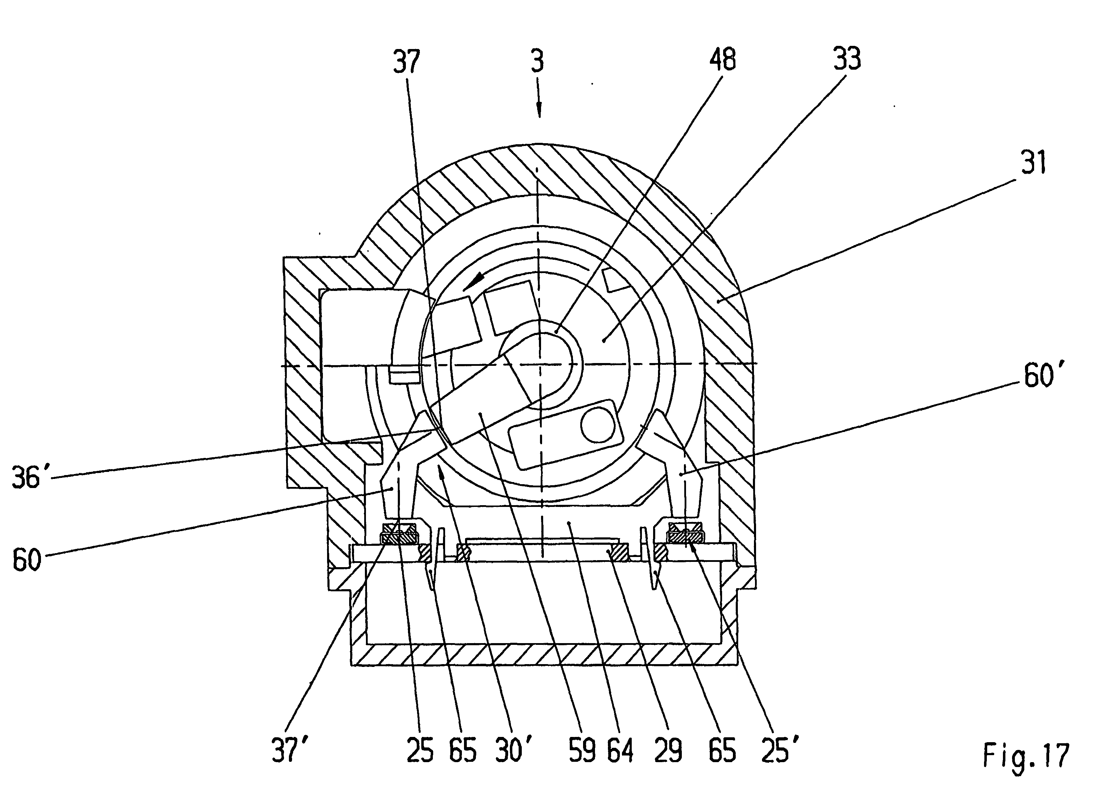

Bei diesem Schloß 3 sind die elektrooptischen Wandlerelemente 25 als Mittel zur Verarbeitung des optischen Betriebssignals 9 wiederum versetzt zu der optischen Übertragungsstrecke 26 angeordnet. Allerdings ist nunmehr die Leiterplatte 29, die die elektrooptischen Wandlerelemente 25 und die Bauelemente der Schloßelektronik 24 aufnimmt, in etwa quer zum Rotor 33 angeordnet. Dadurch sind die elektrooptischen Wandlerelemente 25 im wesentlichen in zwei Richtungen zur optischen Übertragungsstrecke 26 versetzt, was insbesondere bei gemeinsamer Betrachtung der Fig. 16 und 17 deutlich wird. In den Fig. 16 und 17 sind der besseren Übersichtlichkeit wegen die zur elektromagnetischen Sperre 34 und Lenkungsverriegelung 57 zugehörigen Einzelteile weitgehend weggelassen.

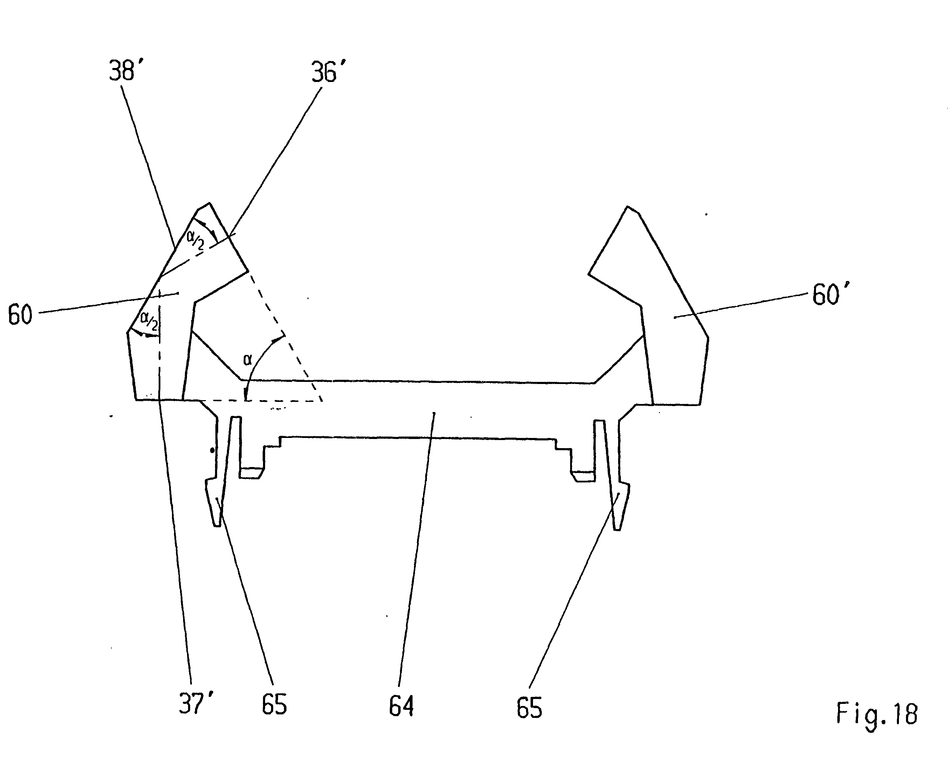

Das optische Umlenkungselement 30' besteht bei dieser Ausführung für das Schloß 3 aus zwei Teilen 59, 60. Der erste Teil 59 ist mit dem Lichtleitstab 48 der optischen Übertragungsstrecke 26 verbunden, wobei vorliegend der Lichtleitstab 48 und der erste Teil 59 des optischen Umlenkungselementes 30' als einstückiges Teil ausgebildet sind, wie der Fig. 16 zu entnehmen ist. Dadurch ist der erste Teil 59 drehbar mit dem Rotor 33 angeordnet. Der zweite Teil 60 des optischen Umlenkungselements 30' ist den als Mitteln zur Verarbeitung des optischen Betriebssignals 9 dienenden elektrooptischen Wandlerelementen 25 zugeordnet und feststehend im Gehäuse 31 angeordnet, was näher aus Fig. 17 hervorgeht. Während beim ersten Teil 59 die Ein- und Austrittsflächen 36, 37 ungefähr senkrecht aufeinander stehen, stehen die Eintrittsfläche 36' und die Austrittsfläche 37' beim zweiten Teil 60 unter einem Winkel α aufeinander, was aus Fig. 18 näher hervorgeht. Die dazwischen befindliche Reflektionsfläche 38' ist beim zweiten Teil 60 in etwa unter dem halben Winkel, also mit dem Winkel α/2 zur Mittelsenkrechten der Ein- oder Austrittsfläche 36', 37' angeordnet.

Wie man anhand der Fig. 16 sieht, findet im ersten Teil 59 des optischen Umlenkungselements 30' eine Richtungsänderung des optischen Betriebssignals 9 statt. Eine weitere Richtungsänderung des optischen Betriebssignals 9 findet dann im zweiten Teil 60 statt, wie aus Fig. 17 näher hervorgeht. Insgesamt erfolgt somit im optischen Umlenkungselement 30' eine mehrfache, nämlich eine zweifache Richtungsänderung des optischen Betriebssignals 9 zwischen der optischen Übertragungsstrecke 26 sowie von und/oder zu den Mitteln zur Verarbeitung des optischen Betriebssignals 9. Dadurch wird das optische Betriebssignal 9 weitgehend verlustfrei zu den versetzt zur optischen Übertragungsstrecke 26 angeordneten elektrooptischen Wandlerelementen 25 übertragen.

Wie man weiter der Fig. 17 entnimmt, sind der zweite Teil 60, 60' des optischen Umlenkungselements 30' und die elektrooptischen Wandlerelemente 25, 25' je zweifach im Gehäuse 31 angeordnet. Der erste Teil 59 des optischen Umlenkungselements 30' wirkt in Ausgangsstellung des Rotors 33 mit dem einen zweiten Teil 60 des optischen Umlenkungselements 30' zusammen. In Betriebsstellung ist der Rotor 33 hingegen durch den Benutzer manuell mittels des Schlüssels 2 um einen gewissen Drehwinkel bewegt, so daß der erste Teil 59 des optischen Umlenkungselements 30' dann mit dem anderen zweiten Teil 60' des Umlenkungselements 30' zusammenwirkt. Dadurch ist sichergestellt, daß das optische Betriebssignal 9 sowohl beim Starten als auch im Betrieb des Kraftfahrzeugs bestimmungsgemäß zwischen dem Schlüssel 2 und dem Schloß 3 ausgetauscht werden kann. Die beiden zweiten Teile 60, 60' des optischen Umlenkungselements 30' können über ein Distanzstück 64 miteinander einstückig verbunden sein. Mittels Rastelemente 65 am Distanzstück 64 ist eine einfache Montage der zweiten Teile 60, 60' auf der Leiterplatte 29 gewährleistet.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann die Erfindung nicht nur an Zündschlössern o. dgl. für Kraftfahrzeuge eingesetzt werden, sondern kann auch an elektronischen Schlössern von Türen in Gebäuden usw. Verwendung finden.

### Bezugszeichen-Liste:

- 1:: Schließsystem
- 2:: elektronischer Schlüssel
- 3:: elektronisches Schloß
- 4:: Autotüre
- 5:: Steuergerät
- 6:: Signalverarbeitungseinrichtung
- 7:: Innenspiegel
- 8:: Betriebssignal (für Autotür)
- 9:: Betriebssignal (für Schloß)
- 10:: Empfangs- und Sendeeinrichtung
- 11:: Aufnahme (am Schloß)
- 12:: Bussystem
- 13:: Betriebsaggregat
- 14,15, 16:: Betätigungsorgan (am Schlüssel)
- 17:: Gehäuse (des Schlüssels)
- 18:: Frontteil (des Schlüssels)
- 19:: Schlüsselelektronik
- 20:: Schalter (Signal "Schlüssel steckt")
- 21:: induktive Energieübertragung
- 22:: Induktionsspule
- 23:: elektrooptische Wandlerelemente (im Schlüssel)
- 24:: Schloßelektronik
- 25:: elektrooptische Wandlerelemente (im Schloß)
- 26:: optische Übertragungsstrecke
- 27:: erstes Ende (der optischen Übertragungsstrecke)
- 28:: zweites Ende (der optischen Übertragungsstrecke)
- 29:: Leiterplatte
- 30,30':: optisches Umlenkungselement
- 31:: Gehäuse (von Schloß)
- 32:: Gehäuseansatz
- 33:: Rotor
- 34:: elektromagnetische Sperre
- 35:: Schaltelement (von Lastschalter)
- 36,36', 37,37':: Fläche (am Ein/Austritt des optischen Umlenkungselements)
- 38,38':: Reflektionsfläche (am optischen Umlenkungselement)
- 39:: Linse / Streulinse (am optischen Umlenkungselement)
- 40:: Linse / Sammellinse (am optischen Umlenkungselement)
- 41:: Abdeckung (an Reflektionsfläche)
- 42:: Halterung / Halteelement
- 43:: Rast- und/oder Schnapphaken
- 44:: Nase (am Halteelement)
- 45:: Aufnahme (am Halteelement)
- 46:: Dichtung (am Lichtleitstab)
- 47:: Dichtung (am Rotor)
- 48:: Lichtleitstab
- 49:: konische Erweiterung (am Lichtleitstab)
- 50:: Sperrhebel
- 51:: Ausnehmung (am Rotor)
- 52:: Gehäuseteil (von Lastschalter)
- 53', 53'':: Lagerstelle (Drehlager für Rotor)
- 54:: Lastschalter
- 55:: Rastarm (an Abdeckung für Umlenkelement)
- 56:: Kappe
- 57:: Lenkungsverriegelung
- 58:: Lenkradsäule
- 59:: erster Teil (von optischem Umlenkungselement)
- 60,60':: zweiter Teil (von optischem Umlenkungselement)
- 61:: Stößel (für Schalter "Schlüssel steckt")
- 62:: Rastelement (an Gehäuseteil von Lastschalter)
- 63:: Gehäuseteil (für Rotor)
- 64:: Distanzstück
- 65:: Rastelement (an Distanzstück)

## Patentansprüche

1. Elektronisches Schloß für ein Schließsystem (1) mit einem zugehörigen elektronischen Schlüssel (2), insbesondere elektronisches Zündschloß für ein Kraftfahrzeug zur Betätigung eines zugehörigen Betriebsaggregats (13), wie Motorsteuerung, Wegfahrsperre o. dgl., wobei der Schlüssel (2) mit dem Schloß (3) wenigstens ein codiertes optisches Betriebssignal (9) austauscht, wobei im Schloß (3) eine im wesentlichen lineare, als Lichtleitstab (48) ausgebildete optische Übertragungsstrecke (26) zur Weiterleitung des optischen Betriebssignals (9) vorhanden ist, wobei der Schlüssel (2) dem ersten Ende (27) der optischen Übertragungsstrecke (26) zugeordnet ist, wobei im Schloß (3) dem zweiten Ende (28) der optischen Übertragungsstrecke (26) zugeordnete Mittel zur Verarbeitung des optischen Betriebssignals (9), wie elektrooptische Wandlerelemente (25) o. dgl., angeordnet sind, wobei die Mittel zur Verarbeitung des optischen Betriebssignals (9) mit einem Abstand zu der optischen Übertragungsstrecke (26) angeordnet sind, und wobei sich an dem zweiten Ende (28) der optischen Übertragungsstrecke (26) ein optisches Umlenkungselement (30, 30') befindet, derartw daß im optischen Umlenkungselement (30, 30') eine Richtungsänderung des optischen Betriebssignals (9) zwischen der optischen Übertragungsstrecke (26) sowie von und/oder zu den Mitteln zur Verarbeitung des optischen Betriebssignals (9) erfolgt, **dadurch gekennzeichnet, daß** der Lichtleitstab (48) beweglich in Richtung auf das Umlenkungselement (30) im Schloß (3) angeordnet ist, und daß bei Einführen des Schlüssels (2) in das Schloß (3) das zweite Ende (28) des Lichtleitstabes (48) in unmittelbare Nähe an das Umlenkungselement (30) bewegt wird.

2. Elektronisches Schloß nach Anspruch 1, **dadurch gekennzeichnet, daß** die Mittel zur Verarbeitung des optischen Betriebssignals (9) mit einem seitlichen Abstand, insbesondere ungefähr parallel zur optischen Übertragungsstrecke (26) angeordnet sind, daß vorzugsweise eine Richtungsänderung des optischen Betriebssignals (9) im optischen Umlenkungselement (30) um ungefähr 90 Grad erfolgt, daß weiter vorzugsweise die Mittel zur Verarbeitung des optischen Betriebssignals (9) auf einer insbesondere in etwa parallel zur optischen Übertragungsstrecke (26) angeordneten Leiterplatte (29) befindlich sind, und daß noch weiter vorzugsweise das Schloss (3) lediglich eine einzige Leiterplatte (29) enthält, auf der weitere zum Betrieb des Schlosses (3) dienende elektronische und/oder elektrische Bauteile angeordnet sind.

3. Elektronisches Schloß nach Anspruch 1 oder 2, **dadurch gekennzeichnet, daß** durch die Bewegung des Lichtleitstabes (48) ein elektrisches Schaltelement (20) im Schloß (3) zur Signalisierung "Schlüssel steckt" betätigt wird.

4. Elektronisches Schloß nach Anspruch 1, 2 oder 3, **dadurch gekennzeichnet, daß** das Schloß (3) eine Aufnahme (11) für den Schlüssel (2) besitzt, wobei vorzugsweise der Schlüssel (2) in der Aufnahme (11) auf einen im Schloß (3) befindlichen Rotor (33) zu dessen Drehung einwirkt, und wobei gegebenenfalls eine Lagerstelle (53') für das Drehlager des Rotors (33) als Halbschale an einem Gehäuseteil (63) ausgebildet ist, daß weiter vorzugsweise der Rotor (33) bei der Drehung mit Schaltelementen (35) in der Art eines Lastschalters (54) zusammenwirkt, wobei noch weiter vorzugsweise eines der Schaltelemente (20) im Lastschalter (54) das Signal "Schlüssel steckt" erzeugt, und daß nochmals weiter vorzugsweise der Lichtleitstab (48) in einem Durchbruch im Rotor (33) angeordnet ist.

5. Elektronisches Schloß nach einem der Ansprüche 1 bis 4, **dadurch gekennzeichnet, daß** das optische Umlenkungselement (30, 30') zwei unter einem Winkel (α), insbesondere ungefähr senkrecht aufeinander stehende Ein- und/oder Austrittsflächen (36, 36', 37, 37') mit einer dazwischen befindlichen, in etwa unter dem halben Winkel (α/2), insbesondere von 45 Grad, auf die Mittelsenkrechte der Ein- und/oder Austrittsfläche (36, 36', 37, 37') stehende Reflektionsfläche (38, 38') für das optische Betriebssignal (9) besitzt, daß vorzugsweise an der Ein- und/oder Austrittsfläche (36, 37) eine Linse (39, 40), insbesondere eine an die Ein- und/oder Austrittsfläche (36, 37) einstückig angeformte Linse (39, 40), befindlich ist, daß weiter vorzugsweise die Reflektionsfläche (38, 38') eben oder leicht ballig ausgebildet ist, und daß noch weiter vorzugsweise das optische Umlenkungselement (30, 30') eine spiegelglänzende Oberfläche, insbesondere an der Reflektionsfläche (38, 38') besitzt.

6. Elektronisches Schloß nach Anspruch 5, **dadurch gekennzeichnet, daß** an der Reflektionsfläche (38) eine als Staubschutz o. dgl. dienende Abdeckung (41) angeordnet ist, und daß vorzugsweise die Abdeckung (41) aus einer mittels Bedrucken, Bedampfen o. dgl. der Reflektionsfläche (38) aufgebrachten Schicht, oder aus einem auf die Reflektionsfläche (38) aufgesetzten separaten Teil, das in der Art einer Kappe (56) ausgestaltet ist, oder aus einem an die Reflektionsfläche (38) in der Art eines Zweikomponententeils angespritztem Element besteht.

7. Elektronisches Schloß nach einem der Ansprüche 1 bis 6, **dadurch gekennzeichnet, daß** das Umlenkungselement (30) ein zur Fixierung im Gehäuse (31) des Schlosses (3) dienendes Halteelement (42) besitzt, daß vorzugsweise das Halteelement (42) mit Rast- und/oder Schnapphaken (43) an der Leiterplatte (29) angeordnet ist, derart daß das optische Umlenkungselement (30) zu den Mitteln zur Verarbeitung des optischen Betriebssignals (9) ausgerichtet ist, daß weiter vorzugsweise das Halteelement (42) einstückig mit dem Gehäuseteil (63) für den Rotor (33) ausgebildet ist, daß noch weiter vorzugsweise das Halteelement (42) eine dem Rotor (33) zugeordnete, als Halbschale ausgebildete Nase (44) besitzt, die als weitere Lagerstelle (53'') für das Drehlager des Rotors (33) dient, und daß nochmals weiter vorzugsweise das Halteelement (42) am Umlenkungselement (30) integriert ist oder das Halteelement (42) als separates Trägerteil mit einer Aufnahme (45) für das Umlenkungselement (30) ausgebildet ist oder das Halteelement (42) und das Umlenkungselement (30) in der Art eines Zweikomponententeils ausgebildet sind, wobei es sich insbesondere bei dem Zweikompontenteil um dasjenige handelt, das als Abdeckung (41) an der Reflektionsfläche (38) angeordnet ist.

8. Elektronisches Schloß nach einem der Ansprüche 1 bis 7, **dadurch gekennzeichnet, daß** im Gehäuse (31) des Schlosses (3) eine auf den Lichtleitstab (48) einwirkende Dichtung (46) angeordnet ist, daß vorzugsweise sich im Gehäuse (31) eine auf den Rotor (33) einwirkende weitere Dichtung (47) befindet und daß weiter vorzugsweise die Dichtung (46, 47) als elastisches Dichtelement oder Labyrinth-Dichtung ausgebildet ist.

9. Elektronisches Schloß nach einem der Ansprüche 1 bis 8, **dadurch gekennzeichnet, daß** die Mittel zur Verarbeitung des optischen Betriebssignals (9) versetzt zu der optischen Übertragungsstrecke (26) angeordnet sind, daß im optischen Umlenkungselement (30') eine mehrfache, insbesondere eine zweifache Richtungsänderung des optischen Betriebssignals (9) zwischen der optischen Übertragungsstrecke (26) sowie von und/oder zu den Mitteln zur Verarbeitung des optischen Betriebssignals (9) erfolgt, und daß vorzugsweise das optische Umlenkungselement (30') aus zwei Teilen (59, 60, 60') besteht, wobei der erste Teil (59) drehbar mit dem Rotor (33) angeordnet ist, insbesondere einstückig mit dem Lichtleitstab (48) der optischen Übertragungsstrecke (26) ausgebildet ist, und der zweite Teil (60, 60') den Mitteln zur Verarbeitung des optischen Betriebssignals (9) zugeordnet, feststehend im Gehäuse (31) des Schlosses (3) angeordnet ist.

10. Elektronisches Schloß nach Anspruch 9, **dadurch gekennzeichnet, daß** der zweite Teil (60, 60') des Umlenkungselements (30') und die Mittel zur Verarbeitung des optischen Betriebssignals (9) je zweifach im Gehäuse (31) des Schlosses (3) angeordnet sind, wobei der erste Teil (59) des Umlenkungselements (30') in Ausgangsstellung des Rotors (33) mit dem einen zweiten Teil (60) des Umlenkungselements (30') und in Betriebsstellung des Rotors (33) mit dem anderen zweiten Teil (60') des Umlenkungselements (30') zusammenwirkt.

## Claims

1. Electronic lock for a locking system (1) with an associated electronic key (2), in particular an electronic ignition lock for a motor vehicle for actuating an associated operating unit (13), such as an engine control, immobiliser, or the like, the key (2) exchanging at least one coded optical operating signal (9) with the lock (3), wherein a substantially linear optical transmission path (26) designed as a light-conducting rod (48) is present in the lock (3) to pass on the optical operating signal (9), the key (2) being associated with the first end (27) of the optical transmission path (26), means, such as electro-optical converter elements (25), or the like, associated with the second end (28) of the optical transmission path (26) being arranged in the lock (3) for processing the optical operating signal (9) the means for processing the optical operating signal (9) being arranged at a distance from the optical transmission path (26), and an optical deflection element (30, 30') being located on the second end (28) of the optical transmission path (26) such that a change in the direction of the optical operating signal (9) takes place in the optical deflection element (30, 30') between the optical transmission path (26) and from and/or to the means for processing the optical operating signal (9), **characterised in that** the light-conducting rod (48) is arranged in the lock (3) to be movable in the direction of the deflection element (30), and **in that** when the key (2) is introduced into the lock (3) the second end (28) of the light-conducting rod (48) is moved into the immediate vicinity of the deflection element (30).

2. Electronic lock according to claim 1, **characterised in that** the means for processing the optical operating system (9) are arranged at a lateral distance, in particular approximately parallel to the optical transmission path (26), **in that** a change in the direction of the optical operating signal (9) preferably takes place in the optical deflection element (30) about approximately 90°, **in that** the means for processing the optical operating signal (9) are also preferably located on a printed circuit board (29) arranged, in particular, substantially parallel to the optical transmission path (26), and **in that** the lock (3) also preferably contains only a single printed circuit board (29) on which further electronic and/or electric components are arranged to operate the lock (3).

3. Electronic lock according to claim 1 or 2, **characterised in that** an electric switching element (20) in the lock (3) is actuated by the movement of the light-conducting rod (48) to signal "key inserted".

4. Electronic lock according to claim 1, 2 or 3, **characterised in that** the lock (3) has a receiver (11) for the key (2), the key (2) in the receiver (11) preferably acting on a rotor (33) located in the lock (3) to rotate it, optionally a bearing (53') for the rotary bearing of the rotor (33) being constructed as a shell on a housing part (63), **in that** on rotation, the rotor (33) also preferably cooperates with switching elements (35) in the manner of a mechanical switch (54), one of the switching elements (20) in the mechanical switch (54) also preferably generating the signal "key inserted", and **in that** the light-conducting rod (48) is also preferably arranged in an opening in the rotor (33).

5. Electronic lock according to any of claims 1 to 4, **characterised in that** the optical deflection element (30, 30') comprises two entry and/or exit faces (36, 36', 37, 37') located at an angle (α), in particular approximately perpendicular, to one another, with a reflective face (38, 38') located therebetween and located approximately at half the angle (α/2), in particular of 45°, on the mid-perpendicular of the entry and/or exit face (36, 36', 37, 37') for the optical operating signal (9), **in that** a lens (39, 40), in particular a lens (39, 40) formed in one piece on the entry and/or exit face (36, 37), is preferably located on the entry and/or exit face (36, 37), **in that** the reflective face (38, 38') is also preferably designed so as to be flat or slightly convex, and **in that** the optical deflection element (30, 30') also preferably comprises a specular surface, in particular on the reflective face (38, 38').

6. Electronic lock according to claim 5, **characterised in that** a cover (41) is arranged on the reflective face (38) as a dust guard or the like, and **in that** the cover (41) preferably consists of a layer applied by means of printing, vaporising or the like of the reflective face (38), or of a separate part placed on the reflective face (38) and which is configured in the manner of a cap (56), or of an element injected onto the reflective face (38) in the manner of a two-component part.

7. Electronic lock according to any of claims 1 to 6, **characterised in that** the deflection element (30) comprises a holding element (42) used for fixing in the housing (31) of the lock (3), **in that** the holding element (42) is preferably arranged on the printed circuit board (29) with latching and/or snap hooks (43), in such a way that the optical deflection element (30) is oriented toward the means for processing the optical operating signal (9), **in that** the holding element (42) is also preferably constructed in one piece with the housing part (63) for the rotor (33), **in that** the holding element (42) also preferably comprises a lug (44) designed as a shell and associated with the rotor (33), the lug being used as a further bearing (53'') for the rotary bearing of the rotor (33), and **in that** the holding element (42) is also preferably integrated on the deflection element (30) or the holding element (42) is constructed as a separate carrying part with a receiver (45) for the deflection element (30) or the holding element (42) and the deflection element (30) are constructed in the manner of a two-component part, the two-component part in particular being that which is arranged as a cover (41) on the reflective face (38).

8. Electronic lock according to any of claims 1 to 7, **characterised in that** a seal (46) acting on the light-conducting rod (48) is arranged in the housing (31) of the lock (3), **in that** a further seal (47) acting on the rotor (33) is preferably located in the housing (31) and **in that** the seal (46, 47) is also preferably designed as an elastic sealing element or labyrinth seal.

9. Electronic lock according to any of claims 1 to 8, **characterised in that** the means for processing the optical operating signal (9) are arranged offset to the optical transmission path (26) **in that** a multiple, in particular a double change in the direction of the optical operating signal (9) takes place in the optical deflection element (30') between the optical transmission path (26) and from and/or to the means for processing the optical operating signal (9), and **in that** the optical deflection element (30') preferably consists of two parts (59, 60, 60'), the first part (59) being rotatably arranged with the rotor (33), in particular is designed in one piece with the light-conducting rod (48) of the optical transmission path (26), and the second part (60, 60') associated with the means for processing the optical operating signal (9) is arranged fixed in the housing (31) of the lock (3).

10. Electronic lock according to claim 9, **characterised in that** the second part (60, 60') of the deflection element (30') and the means for processing the optical operating signal (9) are each arranged in duplicate in the housing (31) of the lock (3), in the starting position of the rotor (33) the first part (59) of the deflection element (30') cooperating with the one second part (60) of the deflection element (30') and in the operating position of the rotor (33) with the other second part (60') of the deflection element (30').

## Revendications

1. Serrure électronique pour un système de fermeture (1) avec une clé (2) électronique associée, en particulier serrure de contact électronique pour un véhicule automobile afin d'actionner un groupe de fonctionnement associé (13) tel que commande de moteur, système antidémarrage ou autre, la clé (2) échangeant avec la serrure (3) au moins un signal de fonctionnement optique codé (9), une liaison de transmission optique (26) essentiellement linéaire, conçue comme une barre à fibres optiques (48) destinée à transmettre le signal de fonctionnement optique (9) étant prévue, la clé (2) étant associée à la première extrémité (27) de la liaison de transmission optique (26), des moyens associés à la deuxième extrémité (28) de la liaison de transmission optique (26) pour le traitement du signal de fonctionnement optique (9), tels que des éléments convertisseurs électro-optiques (25) ou similaires, étant disposés dans la serrure (3), les moyens destinés à traiter le signal de fonctionnement optique (9) étant disposés avec un écart par rapport à la liaison de transmission optique (26) et un élément de déviation optique (30, 30') se trouvant à la deuxième extrémité (28) de la liaison de transmission optique (26) de telle façon qu'un changement de direction du signal de fonctionnement optique (9) a lieu dans l'élément de déviation optique (30, 30') entre la liaison de transmission optique (26) ainsi qu'à partir des moyens de traitement du signal de fonctionnement optique (9) et/ou vers ceux-ci,
**caractérisée en ce que** la barre à fibres optiques (48) est disposée dans la serrure (3) de manière mobile en direction de l'élément de déviation (30) et **en ce que**, lors de l'introduction de la clé (2) dans la serrure (3), la deuxième extrémité (28) de la barre à fibres optiques (48) est déplacée à proximité immédiate de l'élément de déviation (30).

2. Serrure électronique selon la revendication 1,
**caractérisée en ce que** les moyens de traitement du signal de fonctionnement optique (9) sont disposés avec un écart latéral, en particulier environ parallèlement à la liaison de transmission optique (26), **en ce qu'**un changement de direction du signal de fonctionnement optique (9) d'environ 90° s'effectue de préférence dans l'élément de déviation optique (30), **en ce qu'**en outre les moyens de traitement du signal de fonctionnement optique (9) se trouvent de préférence sur une plaquette de circuits imprimés (29) disposée en particulier à peu près parallèlement à la liaison de transmission optique (26) et **en ce qu'**en outre de préférence la serrure (3) contient seulement une plaquette de circuits imprimés unique (29) sur laquelle d'autres composants électroniques et/ou électriques servant au fonctionnement de la serrure (3) sont disposés.

3. Serrure électronique selon la revendication 1 ou 2,
**caractérisée en ce que**, par le déplacement de la barre à fibres optiques (48), un élément de commutation électrique (20) est actionné dans la serrure (3) pour signaler « clé dans la serrure ».

4. Serrure électronique selon la revendication 1, 2 ou 3,
**caractérisée en ce que** la serrure (3) possède un logement (11) pour la clé (2), la clé (2) agissant de préférence dans le logement (11) sur un rotor (33) se trouvant dans la serrure (3) pour la rotation de celui-ci et éventuellement un point d'appui (53') pour le palier de rotation du rotor (33) étant formé comme une demi-coque sur une partie de logement (63), **en ce qu'**en outre de préférence le rotor (33) coopère lors de la rotation avec des éléments de commande (35) à la manière d'un interrupteur à coupure en charge (54), en outre de manière préférentielle l'un des éléments de commande (20) produisant dans l'interrupteur à coupure en charge (54) le signal « clé dans la serrure », et **en ce qu'**en outre de préférence la barre à fibres optiques (48) est disposée dans une percée dans le rotor (33).

5. Serrure électronique selon l'une des revendications 1 à 4,
**caractérisée en ce que** l'élément de déviation optique (30, 30') possède pour le signal de fonctionnement optique (9) deux surfaces d'entrée et/ou surfaces de sortie (36, 36', 37, 37') formant un angle (α), en particulier environ perpendiculaires entre elles avec une surface réfléchissante (38, 38') pour le signal de fonctionnement optique (9) située entre elles, tombant sur la médiatrice de la surface d'entrée et/ou de sortie (36, 36', 37, 37') en formant environ le demi-angle (α/2), en particulier de 45 degrés, **en ce qu'**une lentille (39, 40) se trouve de préférence sur la surface d'entrée et/ou de sortie (36, 37), en particulier une lentille (39, 40) formée d'une seule pièce sur la surface d'entrée et/ou de sortie (36, 37), **en ce qu'**en outre de préférence la surface réfléchissante (38, 38') est plane ou légèrement bombée et **en ce qu'**en outre de préférence l'élément de déviation optique (30, 30') possède une surface polie miroir, en particulier sur la surface réfléchissante (38, 38').

6. Serrure électronique selon la revendication 5,
**caractérisée en ce qu'**un recouvrement (41) servant de protection contre la poussière ou similaire est disposé sur la surface réfléchissante (38) et **en ce que** de préférence le recouvrement (41) est constitué d'une couche appliquée sur la surface réfléchissante (38) au moyen d'impression, de métallisation sous vide ou similaire ou d'une partie séparée posée sur la surface réfléchissante (38) qui est conçue à la manière d'un chapeau (56) ou d'un élément projeté sur la surface réfléchissante (38) à la manière d'une pièce à deux composants.

7. Serrure électronique selon l'une des revendications 1 à 6,
**caractérisée en ce que** l'élément de déviation (30) possède un élément de retenue (42) servant à fixer la serrure (3) dans le logement (31), **en ce que** de préférence l'élément de retenue (42) est disposé sur la plaquette de circuits imprimés (29) avec des crochets à cran et/ou à cliquet (43) de façon que l'élément de déviation optique (30) soit orienté vers les moyens de traitement du signal de fonctionnement optique (9), **en ce qu'**en outre de préférence l'élément de retenue (42) est formé d'une seule pièce avec la partie boîtier (63) pour le rotor (33), **en ce qu'**en outre de préférence l'élément de retenue (42) possède un bec (44) associé au rotor (33), formé comme une demi-coque, qui sert comme autre point d'appui (53") pour le palier de rotation du rotor (33) et **en ce qu'**en outre encore de préférence l'élément de retenue (42) est intégré sur l'élément de déviation (30) ou que l'élément de retenue (42) est conçu comme pièce porteuse séparée avec un logement (45) pour l'élément de déviation (30) ou l'élément de retenue (42) et l'élément de déviation (30) sont conçus à la manière d'une pièce à deux composants, s'agissant en particulier pour la pièce à deux composants de celle qui est disposée comme recouvrement (41) sur la surface réfléchissante (38).

8. Serrure électronique selon l'une des revendications 1 à 7,
**caractérisée en ce qu'**un joint (46) agissant sur la barre à fibres optiques (48) est disposé dans le boîtier (31) de la serrure (3), **en ce que** de préférence un autre joint (47) agissant sur le rotor (33) se trouve dans le boîtier (31) et **en ce qu'**en outre de préférence le joint (46, 47) est conçu comme un élément d'étanchéité élastique ou comme un joint à labyrinthe.

9. Serrure électronique selon l'une des revendications 1 à 8,
**caractérisée en ce que** les moyens de traitement du signal de fonctionnement optique (9) sont disposés décalés par rapport à la liaison de transmission optique (26), **en ce que** dans l'élément de déviation optique (30') un changement de direction multiple, en particulier double, du signal de fonctionnement optique (9) a lieu entre la liaison de transmission optique (26) ainsi qu'à partir des moyens de traitement du signal de fonctionnement optique (9) et/ou vers ceux-ci et **en ce que** de préférence l'élément de déviation optique (30') est constitué de deux parties (59, 60, 60'), la première partie (59) étant disposée de manière à pouvoir tourner avec le rotor (33), en particulier d'une seule pièce avec la barre à fibres optiques (48) de la liaison de transmission optique (26), et la deuxième partie (60, 60') est disposée associée aux moyens de traitement du signal de fonctionnement optique (9), de manière fixe dans le boîtier (31) de la serrure (3).

10. Serrure électronique selon la revendication 9,
**caractérisée en ce que** la deuxième partie (60, 60') de l'élément de déviation (30') et les moyens de traitement du signal de fonctionnement optique (9) sont disposés chacun en double dans le boîtier (31) de la serrure (3), la première partie (59) de l'élément de déviation (30') coopérant dans la position de départ du rotor (33) avec la deuxième partie (60) de l'élément de déviation (30') et, dans la position de fonctionnement du rotor (33), avec l'autre deuxième partie (60') de l'élément de déviation (30').
